(19) **Europäisches Patentamt / European Patent Office / Office européen des brevets**

(11) **EP 4 068 100 B1**

(12) ## EUROPEAN PATENT SPECIFICATION

(45) Date of publication and mention
of the grant of the patent:
**23.10.2024 Bulletin 2024/43**

(21) Application number: **22165104.5**

(22) Date of filing: **29.03.2022**

(51) International Patent Classification (IPC):
**G06N 7/01** $^{(2023.01)}$   **G06N 20/10** $^{(2019.01)}$
**G06F 11/22** $^{(2006.01)}$   **G06F 11/34** $^{(2006.01)}$

(52) Cooperative Patent Classification (CPC):
**G06F 11/3452; G06F 11/2289; G06F 11/3409;
G06F 11/3442; G06N 7/01; G06N 20/10**

(54) **METHOD AND SYSTEM FOR TUNING A COMPUTING ENVIRONMENT USING A KNOWLEDGE BASE**

VERFAHREN UND SYSTEM ZUM ABSTIMMEN EINER RECHNERUMGEBUNG UNTER VERWENDUNG EINER WISSENSBASIS

PROCÉDÉ ET SYSTÈME PERMETTANT DE RÉGLER UN ENVIRONNEMENT INFORMATIQUE À L'AIDE D'UNE BASE DE CONNAISSANCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2021 IT 202100007631**

(43) Date of publication of application:
**05.10.2022 Bulletin 2022/40**

(73) Proprietor: **Akamas Societa' Per Azioni
20158 Milano (IT)**

(72) Inventors:
• **CEREDA, Stefano**
 **20158 Milano (IT)**
• **CREMONESI, Paolo**
 **20158 Milano (IT)**
• **DONI, Stefano**
 **20158 Milano (IT)**
• **GIBILISCO, Giovanni Paolo**
 **20158 Milano (IT)**

(74) Representative: **Faggioni, Carlo Maria et al
Fumero S.r.l.
Pettenkoferstrasse 20/22
80336 München (DE)**

(56) References cited:
**US-A1- 2020 293 835**

• **STEFANO CEREDA ET AL: "A Collaborative Filtering Approach for the Automatic Tuning of Compiler Optimisations", ARXIV.ORG, CORNELL UNIVERSITY LIBRARY, 201 OLIN LIBRARY CORNELL UNIVERSITY ITHACA, NY 14853, 11 May 2020 (2020-05-11), XP081670913, DOI: 10.1145/3372799.3394361**
• **"Neural Information Processing Systems 2011 (NIPS 2001)", vol. 24, 12 December 2011, CURRAN ASSOCIATES, INC., article ANDREAS KRAUSE ET AL: "Contextual Gaussian Process Bandit Optimization", pages: 2447 - 2455, XP055400039**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention

The present invention relates to a method and a system for tuning adjustable parameters in a computing environment. In particular, a method and system which is able to automatically tune adjustable parameters affecting the performance of an IT system based on a knowledge base of similar IT systems and possibly of the same IT system exposed to different external working conditions.

Background art

A modern IT system is composed of several layers, ranging from virtual machines, middlewares, databases, operating systems down to the physical machine itself. Each layer offers a wide variety of configurable parameters that control its behaviour. Selecting the proper configuration is crucial to reduce cost and increase performance. Manually finding the optimal configuration, however, can be a daunting task, since the parameters often behave in counter-intuitive ways and have mutual inter-dependencies. As a result, many production IT systems, once deployed, are run with default settings, leaving significant performance or cost improvements on the table.

The configuration problem can be considered an optimization problem, where it is required to find a configuration which optimizes a certain performance indicator.

In this specification, with the term 'optimization' it is meant the process which adjusts a value of a certain parameter which allows to obtain the best possible performance of a quantity (for example data throughput, access speed to a memory area, storage space, and so on) measured through an appropriate metric. It is not possible to state a priori if the maximum value or the minimum value or another value of a parameter allows to reach the desired performance, because this is dependent on the nature of the parameter and the measured quantity: this is why the process is generally said 'optimization' instead of maximization, minimization and so on.

Making reference to complex IT systems, the optimization problem is rather peculiar, making it impractical to use off-the-shelf solutions.

Indeed, the first problem resides in the actual number of parameters, which makes the optimization task astonishingly difficult.

As an example, a typical IT system deployment might consist in the Cassandra™ database, running on top of a Java™ Virtual Machine and the Linux operating system on a cloud instance. Apache Cassandra™ 4.0 has 187 tunable parameters, OpenJDK 11 has 668 tunable parameters, and Linux 5.9.4 has more than 1143 tunable parameters.

It is known that such a complex IT system performance depends upon the applied parameters, but the number of parameters, the model complexity and the ever-changing IT scenario makes it impractical to create an analytical model that describes performance as a function of the applied parameters. Therefore, the usual approach to performance tuning consists in applying an actual configuration to the system and running a performance test to measure the associated performance through a suitable metric. Such performance tests might be run using a synthetic workload or with live production traffic.

The information is then used to decide another configuration to evaluate, going on in an iterative way until a sufficiently good configuration (i.e., leading to good performance) is found.

However, this is quite an expensive and time-consuming process. The most straightforward way to run a performance test, in fact, requires to replicate the entire IT stack and run the application for some time in order to get accurate measurements in many conditions.

Hence, the main goal of a possible autotuning method should be to carefully select which configurations to evaluate, to reduce as much as possible the number of performance tests to run.

To foster the adoption of an autotuner (i.e. a device performing an autotuning method), it is desirable to avoid replicating the entire IT stack, so as to reduce costs. However, this means that the performance tests have to be run directly on the production environment. In this instance, the autotuner must take extra care in avoiding bad configurations which might significantly reduce the performance of the system, as this would directly translate in a lower quality of service and, usually, in an economic loss.

An additional important issue which contributes to increasing the complexity of the optimization problem is that the behaviour of the system, and the effect of the applied configuration of parameters, varies with the external working conditions to which the IT system is exposed, and a proper optimization method needs to take this into account. By external working condition we mean any external factor which might affect the performance of the tuned IT system, such as (but not limited to) the incoming workload, hardware variability, software releases, datacenter temperature, variation in external services on which the IT system relies upon and so on. These conditions have an effect on the performance of the system, but are not under control of the autotuner. Furthermore, oftentimes these factors cannot be measured (or even be aware of their existence), but their effect on the behaviour of the IT system can be just observed.

Another issue arises when running the performance tests in the production environment, where bad configurations of variable parameters (i.e. the ones which lead to poor performance of the IT system) must be avoided at all costs.

Tuning the configuration of an IT system is very tricky: the tunable parameters interact in complex ways, they are embedded in an enormous search space and their effect depends on the external conditions to which the system is exposed.

To highlight the effect of the tunable parameters on the performance, a series of experiments were ran on the MongoDB™ and Cassandra™ DBMSs using the Yahoo!® Cloud Serving Benchmark (YCSB) load injector. The values of the tunable parameters were modified while measuring the throughput of the DBM.

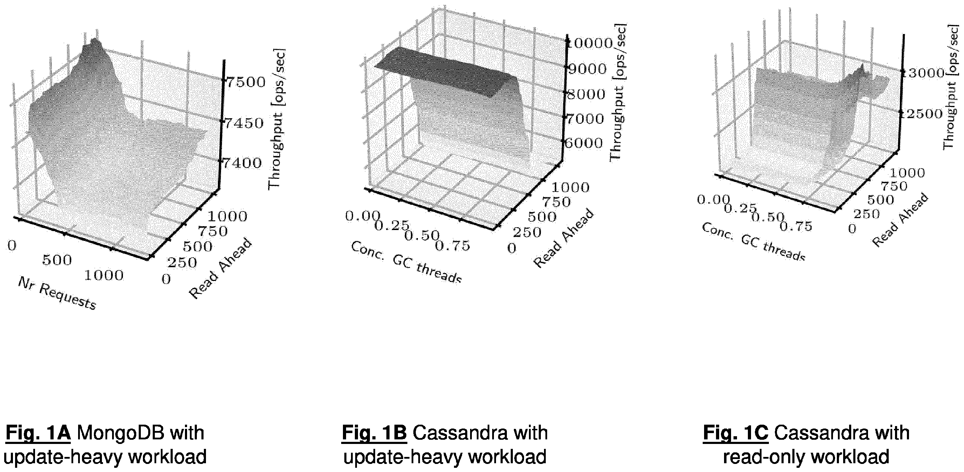

The results are reported in Figg. 1A-1C.

In fig. 1A MongoDB™ and two storage-related parameters of the Linux kernel were used: nr_requests and read_ahead_kb. Properly setting these parameters gives a significant boost to the performance of the DBMS: without considering the entire IT stack, this improvement would have been lost.

In fig. 1B it was used Cassandra™, a database which runs on the Java™ Virtual Machine which has its own tunable parameters: in the example, the number of concurrent garbage collection threads (expressed as a percentage of the available cores) alongside the read-ahead Linux parameter were tuned/varied. It was detected, for example, that the read-ahead has an impressive effect on the performance of Cassandra™ and selecting an improper value thereof destroys the performance.

In fig. 1C the same two parameters of Fig. 1B were modified, but using a different YCSB workload. More precisely, an update heavy workload was changed to a read-only workload. The effect of the two parameters is severely different in the two workload conditions.

It is interesting to notice that the read-ahead parameter has a different effect on different DBMSs: for MongoDB™, using the update-heavy workload, the value of the read-ahead should be increased to get better performance. Conversely, on Cassandra™, with the exact same workload, selecting a high value of read-ahead actually destroys the performance. However, running Cassandra™ with a read-only workload, it is required to go back to a high value for the read ahead, exactly like running MongoDB™ with an update-heavy workload.

These examples motivate the need to jointly consider the entire IT stack and the current workload when tuning IT systems, as they comprise several layers, each one with its own tunable parameters interacting in complex and counter intuitive ways. Even more, characterizing only the incoming workload is not enough to understand the effect of parameters: it shall be considered both the target system, the workload, and any other external condition which might affect the performance of the tuned IT system, such as hardware variability or datacenter temperature.

From the point of view of the operating system, it has been detected that MongoDB™ update-heavy and Cassandra™ read-only are quite similar situations. Apparently, there is a kind of similarity between these systems and it should be exploited to get good results from an optimization engine.

Many solutions have been proposed to solve the configuration autotuning problem for optimization, and they can be broadly divided into two categories: solutions that try to use smarter optimization algorithms/engines and solutions that leverage previously collected knowledge bases.

Using better search techniques helps in reducing the number of bad configurations to test before converging to good ones. However, this can help only up to a certain point and, moreover, many works reported that a random search often performs as well as more sophisticated search techniques and, above all, it could be an effective tool for the exploration of larger search spaces. This should not come as a surprise given the dimension of the search space.

By contrast, using the other approach - which is the subject of the present specification - may lead to advantageous results.

Indeed, if a certain application has been already tuned in the past, the collected information can be exploited to avoid bad configurations and quickly converge towards the optimum.

However, all the knowledge becomes obsolete pretty fast, as new software versions are released, changing the effects of the parameters on the IT stack. Furthermore, new software releases also modify the available parameters, increasing the complexity of reusing old knowledge bases, which lack information about novel parameters. Existing solutions require knowledge bases collected on an accurate replica of the IT system that is the target of the tuning. The knowledge base, in fact, must contain all the layers of the target system, and each layer must be of the exact same version. Furthermore, also the hardware layer must be equal, as different machines might react differently to the same configuration. Such knowledge bases are, thus, extremely costly to collect and must be updated often to be useful.

As an example, if a lot of knowledge is collected about the tuning of the Java™ Virtual Machine when tuning the Cassandra™ DBMS, this cannot be used for tuning a Web Application running on Java™.

On the other hand, as a corresponding example, thinking about a human performance expert, he/she is not expected to lose all his/her own expertise every time he/she switches from one project to another one.

Correspondingly, if it is possible to find similarities across different systems, the knowledge base is likely to be advantageously reused. Coming again to the example of Figs 1A-1C, once it is determined that the Linux kernel should be configured in a similar way for MongoDB™ update-heavy and Cassandra™ read-only, it is possible to reuse on Cassandra™ all the knowledge collected on MongoDB™.

Furthermore, the knowledge base should be updated periodically to reflect changes not only in the software releases, but also in hardware components. Different software versions react differently to the same configurations and new software versions and hardware introduce new tunable parameters. To take these parameters into account, it would be required to periodically rebuild the knowledge base from scratch.

The configuration autotuning problem has been already addressed in the prior art. The proposed solutions, however, offer only a partial solution - as they focus on the tuning of a very specific IT system - which cannot be easily generalized, or they offer a suboptimal solution, as they target a specific tuning problem without exploiting available knowledge.

For example, US 9,958,931 discloses a self-tuning method for computing systems. The method relies on a system-oriented workload, where the load of each "application layer" is defined with a different workload, typical of that application layer; the workload is mapped to buckets and for each bucket, a (sub) set of optimal parameters has been previously defined in the same way (list of optimization schemes that are known to optimize certain workload buckets). A subset of parameters is tuned hierarchically (the hierarchy is defined a priori by using some explicit knowledge). There is no specific suggestion on a method most suitable for optimization, while a plurality of optimization schemes is suggested, one of them being chosen in each bucket.

U.S. 9,958,931 discloses a self-tuning method for the computing system. The method relies on a system-oriented workload, where the load of each "application layer" is defined with a different workload, typical of that application layer; the workload is mapped to buckets and for each bucket, a (sub) set of optimal parameters has been previously defined in same way (list of optimization schemes that are known to optimize certain workload buckets). A subset of parameters is tuned hierarchically (the hierarchy is defined a priori by using some explicit knowledge). There is no specific suggestion on a method most suitable for optimization, while a plurality of optimization schemes is suggested, one of them being chosen in each bucket.

U.S. 9,800,466 discloses a technology for generating and modifying tunable parameter settings for use with a distributed application. It is generally disclosed the use of a machine learning model for obtaining a second set of tunable parameter settings based on performance metrics and implementation attributes associated with a distributed application using a first set of tunable parameter settings selected on the basis of historical data.

U.S. 20120060146 relates to a method of automatically tuning a software application. The method provides to use test parameters and scoring them based on log value and improvement goal. The scored results are stored and then combined with other parameters until a desired criterion is met. It is also disclosed an embodiment where it is made use of a hypothesizer configured to combine the first parameter set with the selected parameter set to produce a second parameter set based on a genetic algorithm.

U.S. 8,954,309 discloses techniques for tuning systems, based on the generation of configurations for effective testing of the system. It is disclosed that machine learning techniques may be used to create models of systems and those models can be used to determine optimal configurations.

Other automatic tuning systems are disclosed in U.S. 2017200091, U.S. 7,908,119, 9,143,554 and U.S. 20060047794. U.S. 20100199267 discloses a system where optimization of the size of an infrastructure configuration is obtained through predictive models.

U.S. 20180349158 discloses Bayesian optimization techniques used in connection with a Java Virtual Machine performance.

Finally, U.S. 20200293835 is referring to a very efficient optimization method. However, this document doesn't disclose a specific solution to exploit existing knowledge bases to the purpose of tuning parameters. Further, Bayesian Optimization is used for the automatic tuning of the configuration of an IT system exposed to a constant workload, but can not be applied to variable external conditions.

The performance autotuning problem has been addressed also in a number of academic works and papers.

As an example, iTuned™ (Songyun Duan, Vamsidhar Thummala, and Shivnath Babu. "Tuning database configuration parameters with ituned" in "Proceedings of the VLDB Endowment 2.1" (Aug. 2009), pp. 1246-1257) works by creating a response surface of DBMS performance using Gaussian Processes. The model is then used to select the next configuration to test. However, a different response surface is built for each workload, without sharing potentially useful information.

In their seminal paper (Dana Van Aken et al. "Automatic database management system tuning through large-scale machine learning". In "Proceedings of the ACM SIGMOD International Conference on Management of Data. Vol. Part F1277. New York, New York, USA: Association for Computing Machinery, May 2017, pp. 1009-1024.), Van Aken et al. introduced Ottertune project: a machine learning solution to the DBMS tuning problem. Ottertune leverages past experience and collects new information to tune DBMS configurations: it uses a combination of supervised and unsupervised machine learning methods to (1) select the most impactful parameters, (2) map unseen database workloads to previous workloads from which it can transfer experience, and (3) recommend parameters settings. The key aspect of Ottertune is its ability to leverage past experience to speed up the search process on new workloads. However, to do so it requires an extensive collection of previous experiments. To fully leverage the Ottertune approach all these experiments should contain all the available parameters. This might be feasible when considering only the DBMS, but it gets more complex as additional layers of the IT stack are considered as the dimension of the search space grows exponentially.

In Andreas Krause ET AL: Contextual Gaussian Process Bandit Optimization" In: "Neural Information Processing Systems 2011 (NIPS2011)" a contextual extension to the Bayesian optimization framework is proposed.

In the paper to STEFANO CEREDA ET AL: "A Collaborative Filtering Approach for the Automatic Tuning of Compiler Optimisations", ARXIV.ORG, CORNELL UNIVERSITY LIBRARY, 201 OLIN LIBRARY CORNELL UNIVERSITY ITHACA, NY 14853, 11 May 2020 (2020-05-11), a characterization methodology is proposed, which is however not able to work with incomplete information and generic external condition variations including, but not limited, to the workload.

## Summary of the invention

The invention is defined in the appended claims. The invention aims to supply a novel solution to the autotuning problem that efficiently solves the problems explained above.

Differently from existing approaches, the object of the invention is to supply a method capable of both exploiting existing knowledge bases and working when such knowledge is not available. The proposed approach is able to also take external conditions, such as the workload, into account and adapt the suggested configurations accordingly. The external conditions and the tunable system are characterized using a novel methodology, resulting in an autotuner apparatus able to exploit knowledge bases collected on different hardware and/or software versions or even entirely different systems, just like a human expert would do. Special attention is given to avoiding bad configurations, so as to make it practical to deploy the proposed autotuner module in a production environment with strict performance and availability requirements.

The intended goal is to design a tuning method able to consider the entire IT stack and to continuously (a so-called 'on the fly' or 'online' process) adapt to the current workload and operating conditions, even without strictly requiring a previously collected knowledge base. When such a knowledge base is available, however, it can be exploited as much as possible to speed up the search process of the tuned configuration and improve the safety of the autotuning process (i.e., avoid bad configurations). More importantly, the system should be able to share knowledge gathered during the tuning of different systems: for example, if it has been learnt how the Linux operating system should be tuned for a DBMS, it should not be required to start from scratch when tuning the Linux operating system running a scientific computation.

Embodiments disclosed in the present specification are relating to techniques and apparatus for tuning adjustable parameters in a typical IT system comprising a server infrastructure having a number of layers (stack of layers) enabling a user to handle an application through which some services are delivered: for example, a server infrastructure of a bank delivering online bank services or a server infrastructure delivering other services to consumers (like purchase recommendations, e-commerce platform, etc.).

Although examples are provided herein predominantly with reference to this kind of environment, it is to be appreciated that said techniques and apparatus are not limited to such server infrastructure. For example, other devices and infrastructures that may benefit from the techniques disclosed herein may include, without limitation, mobile devices, set-top-boxes, laptops, desktop computers, navigation devices installed onboard of moving vehicles, flight management systems in aircrafts and unmanned vehicles and any other similar device where adjustable parameters need to be tuned according to some performance goal.

It is understood that the method of the invention is a computer implemented method. Accordingly, the invention can be enabled as a method through a computer apparatus and relative computer-readable medium storing instructions apt to drive the computer apparatus to perform the method. A computer apparatus or device can include at least an operating memory, a central processing unit (CPU), removable/non-removable data storage and multiple I/O devices (like keyboard, mouse, detecting devices, display screen, printer, sensors, ...).

The computer-readable medium can include data memory devices such as magnetic disks, magnetic tape, RAM, ROM, electrically erasable programmable read-only memory (EEPROM), flash memory or other memory technology, compact disk read-only memory (CD-ROM), digital versatile disks (DVD), or other optical storage and so on. It is understood however that computer-readable media, as used herein, can include not only physical computer storage media but also communication media, such as carrier wave, or another transmission mechanism.

The application of the invention can automatically select configuration parameters of any third-party IT system so as to optimize its performance, cost and resiliency.

The method is able to tune a configuration of an IT system, without using standard tuning guidelines, tailored around the current workload and operating condition.

Detailed features, advantages and embodiments of the invention will be set forth and become apparent from a consideration of the following detailed description, drawings, and claims.

Moreover, it is understood that both the above summary of the invention and the following detailed description are exemplary, not limitative and intended to provide a good explanation - to the extent required to put a skilled person in condition of enabling the invention - without limiting the scope of the invention as claimed. Various changes and modifications within the scope of the invention will become apparent to those skilled in the art from this detailed description.

## Brief description of the drawings

The accompanying drawings are incorporated in and constitute a part of this specification; the drawings are intended to illustrate preferred embodiments of the invention and together with the detailed description are meant to explain the principles of the invention.

The following detailed description of preferred embodiments is given by way of example and shall be read together with the accompanying drawings, wherein:

Fig. 1A-1B are plots of throughput of DBMS in different IT systems where values of some tunable parameters were modified;
Fig. 2 is a diagram showing a layout of the tuning process and architecture of the invention;
Figs. 3A and 3B are two plots exemplifying a Bayesian optimization process;
Figs. 4A-C are plots of Reaction Matching method used to compute tasks distances, in particular fig. 4A representing the value of a performance metric obtained by a task t when compiled with flags specified in $\vec{x}$; fig. 4B is the relevance computed with an equation 2 (see below); and fig. 4C shows the distances between task t and t0, t1, t2 measured with Equation 3 (see below) using $\vec{x_0}$ and $\vec{x_1}$.

## Detailed description of preferred embodiments

In the following, the solution which is suggested to the autotuning problem is disclosed.

A tuning method (implemented through a tuner module) for a System under Test (SUT) provided with a number of adjustable parameters is mainly composed of two components: a characterization module and a tuner module. To give a better understanding, each component is described below in a separate way, and finally their combination is disclosed.

The explanation is however given by first formalizing the configuration autotuning problem, then describing Bayesian Optimization and its contextual extension, then the Reaction Matching characterization and finally the actual autotuning method is described in detail.

## Problem Description

The goal of tuning method or an optimization process is to find such a tuned configuration vector $\vec{x}$ in the configuration space X which, when applied to an IT system s ∈ S, leads to optimize a certain performance indicator $y \in R$.

The performance indicator y can be any measurable property of the system (like throughput, response time, memory consumption, etc....) or a formula combining multiple of such properties.
The tuning method is intended to select the configuration vector $\vec{x}$ by taking into account the particular external working conditions $\vec{w} \in W$ to which the IT system *s* is exposed, where *W* is the space of the possible working conditions and $\vec{w}$ is a descriptor vector of the specific condition provided by a certain characterization methodology.
We also assume that it is available a knowledge base composed by *N* tuples . Where $y_i$ is the value of the performance indicator saved in the iteration *i* of the knowledge base, and was computed after having applied configuration $\vec{x_i}$ to system $s_i$: $y_i = f(s_i, \vec{x_i}, \vec{w_i})$. Note that, performance indicators $y_i$ might have been collected on different systems $s_i$, configurations $\vec{x_i}$ and under different working conditions $\vec{w_i}$. The condition $\vec{w_i}$ is usually not available, so it is not present in the KB. If, instead, it has been measured and $\vec{w_i}$ is available, then it might be present in the KB as well.

As said in the introduction, measuring the condition $\vec{w_i}$ is often not possible (e.g., the temperature of the datacenter when using a cloud service provider) and so it is not in the knowledge base. A key aspect of the disclosed invention is in fact to work when such a characterization is not available.
In other words, in the following specification it is made reference to the vector $\vec{w}$ to refer to different incoming workloads and other external factors such as the variability of other cascading services; but the availability of such information is not a strict requirement of the proposed solution. Nonetheless, if such a vector or characterization is available, the disclosed invention is capable of taking advantage of it.

**Solution Description**

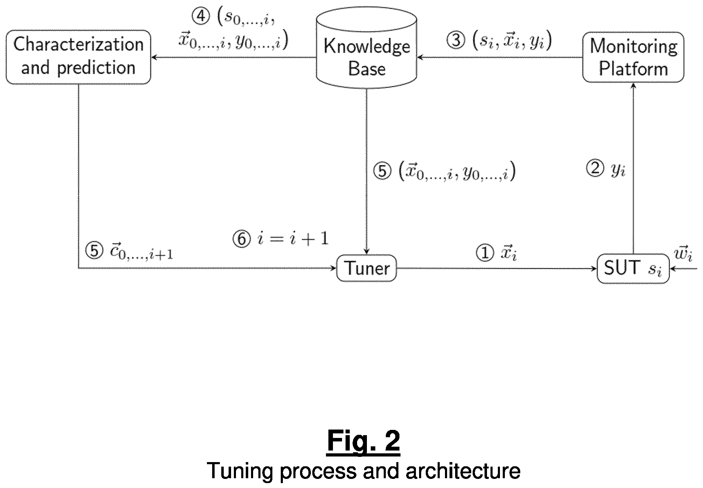

The tuning method is made to run as depicted in Fig. 2 and it is repeated in an iterative way as time passes.

If no knowledge is available, the tuning method starts with an empty knowledge base and performs preliminary steps. In particular, the preliminary tuning iterations are dedicated to bootstrap the knowledge base. The bootstrap process works as follows: initially, the vendor default (baseline) configuration is evaluated $x_0$. Then, the user can specify and input additional configurations to evaluate, if promising configurations are available; otherwise, the method would imply a random step wherein a number of user-defined randomly-selected configurations are evaluated. It is supposed that the knowledge has been gathered in the same search space that it is currently optimizing: $x_i \in X$. Once the knowledge base is initialized, the tuning process can start.

Iteration $i$ is started by applying to a System Under Test (SUT) a configuration $\vec{x_i}$ suggested by the tuner module (described in detail in the following), see step (1). Then, the configuration is evaluated to gather performance metrics, resulting in a performance score $y_i$, see step (2). It shall be noted that at iteration i the system $s_i$ is subject to an externally controlled working condition $\vec{w_i}$, which cannot be controlled and usually not even measured. The evaluation $y_i$ might be also subject to noise. Meaning that multiple performance evaluations in the same condition $(s_i, \vec{x_i}, \vec{w_i})$ might lead to different performance measurements. At this point the evaluation of $x_i$ has been completed. the collected data (i.e., the tuple )) are stored in the knowledge base (see step (3)) and get ready for the next iteration. Notice that, while tuning a system, the applied configuration is modified from one iteration to another (i.e., typically $\vec{x_i} \neq \vec{x_{i+1}}$). However, the system typically does not change from one tuning iteration to the other (i.e., $s_i = s_{i+1}$) and we use the notation $s_i$ to indicate that the system information is stored in the knowledge base, which might include tuples coming from different tuning sessions, conducted on different systems. Nonetheless, it is possible in principle to modify the tuned system at each iteration.

The characterization and prediction module (described in detail in the following) uses the data stored in the knowledge base (see step (4)) to build a characterization vector $\vec{c_i}$, which will be used later by the tuning module . During a characterization step, it is required to reconstruct the missing information about all the past working condition $\vec{w}_{0,...,i}$ and also to capture the information about previous systems $s_{0,...,i}$. More explicitly, the characterization vector $\vec{c_i}$, contains information about both $s_i$ and $\vec{w_i}$. However, the proposed solution does not try to simply derive a characterization of the workload of the system (e.g., requests/sec), which would lack information about other external working conditions. Instead, it builds a characterization of the tuning properties of $(s_i, \vec{w_i})$. In other words, the characterization $c_i$ captures how the tuner should behave at iteration $i$, that is, from which settings the system $s_i$ receives a benefit when exposed to working condition $\vec{w_i}$.

The advantage of the proposed approach is that the characterization of the tunable properties simply captures how the system behaves, without trying to explain this behaviour in terms of conditions, applications, software versions, hardware architectures, or a combination of these factors or other unknown causes.

Furthermore, the characterization and prediction module produces a prediction about the next characterization vector $\vec{c_{i+1}}$.

Finally, the computed characterization $\vec{c_i}$, the predicted characterization vector $\vec{c_{i+1}}$, and the information coming from the knowledge base are supplied to the tuner module, see step (5). At this point, a next iteration can be started again (see step (6)), obtaining a new suggestion from the tuner module and going back to step (1).

Now a separate description of the tuning module and characterization and prediction module is given in the following.

*Bayesian Optimization*

In this section it is explained the behaviour of the tuning module, which is based on Bayesian Optimization.

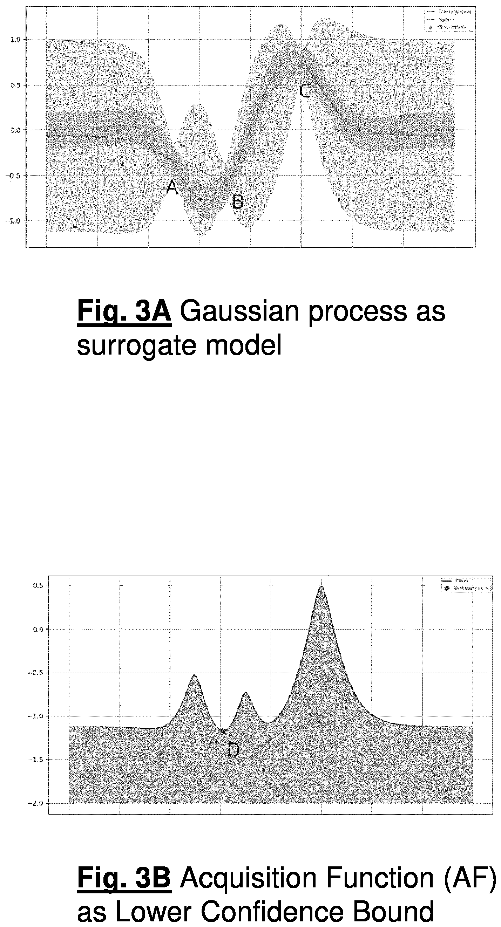

Bayesian Optimization (BO) is a powerful tool that has gained great popularity in recent years (an extensive review of BO can be found in Bobak Shahriari et al. "Taking the Human Out of the Loop: A Review of Bayesian Optimization". In "Proceedings of the IEEE 104.1 (Jan. 2016)", pp. 148-175. issn: 0018-9219.). Here it is given just a brief introduction, visually summarized in Figs. 3A and 3B.

Formally, it is required to optimize an unknown objective function *f*:

$$\vec{x} = \underset{\vec{x} \in X}{argmax} f(\vec{x}) \qquad \qquad \text{(Eq. 1)}$$

where *f* has no simple closed-form but can be evaluated at any arbitrary query point $\vec{x}$ in the relevant domain. The evaluation of function $f$ can lead to find noisy observations in terms of performance parameters $y \in R$, and usually is quite expensive to perform. The goal is to quickly converge toward good points $\vec{x}$ so to quickly optimize $f$.

Moreover, it is required to avoid evaluating points $\vec{x}$ that lead to bad function values. In an ideal scenario, as said above, the autotuner module would run directly in a production environment, and so it is necessary to quickly find well performing configurations and avoid exploring too much the search space. In IT tuning terms, it is desired to find a configuration that optimizes a certain performance indicator y, and this search process should be run to simultaneously: (i) explore the configuration space to gather knowledge, and (ii) exploit the gathered knowledge to quickly converge toward well-performing configurations. Notice that Equation 1 is equivalent to the performance autotuning problem that has been exposed at the beginning of this description, except for the system and working conditions dependence which is not considered at this stage.

More precisely, it is now given a description of a tuner module that works for a single (fixed) SUT-working condition combination.

Bayesian Optimization (BO) is a sequential model-based approach for solving the optimization problem of Equation 1. Essentially, a surrogate model of $f$ is created and it is sequentially refined as more data are observed. Using this model, a value of an Acquisition Function $a_i$, which is used to select the next point $\vec{x}_{i+1}$ to evaluate, is iteratively computed.

The Acquisition Function $a_i$ is analytically derived from the surrogate model output. Intuitively, the acquisition function $a_i$ evaluates the utility of candidate points for the next evaluation of $f$ by trading off the exploration of uncertain regions with the exploitation of good regions. As the acquisition function $a_i$ is analytically derived from the surrogate model, it is very easy to optimize. As an example, the simplest Acquisition Function is the Lower Confidence Bound (LCB), which, for each point, is defined as the value predicted by the surrogate model for that point minus the uncertainty over the prediction. Assuming our goal is to minimize the goal function, the LCB provides an optimistic estimate of the function. The points to evaluate are thus selected either due to a very good predicted value (exploitation) or to a high prediction uncertainty (exploration).

Thus, Bayesian Optimization (BO) has two key ingredients: the surrogate model and the acquisition function $a_i$.

In this contest, Gaussian Processes (GPs) are considered as surrogate models, which is a very popular choice in Bayesian Optimization (BO), however different choices available in the literature (like Random Forests or Neural Networks) would work as well. In the example depicted in Figs. 3A and 3B, Lower Confidence Bound (LCB) is used as an Acquisition Function, but other choices are possible, like Expected Improvement, Probability of Improvement, Thompson Sampling, or even mixed strategies like the GP-Hedge approach which, instead of focusing on a specific acquisition function, adopts a portfolio of acquisition functions governed by an online multi-armed bandit strategy. The key idea of the GP-Hedge approach is to compute many different Acquisition Functions at each tuning iteration, and progressively select the best one according to previous performance.

Making reference to figs. 3A and 3B, an exemplifying Bayesian Optimization (BO) is schematically shown. In that embodiment, it is intended to minimize the unknown function and 3 points have already been observed, which are used to compute the GP predicted mean and uncertainty: these two attributes of GP are combined in the Acquisition Functions to select the next point to evaluate. Different Acquisition Functions select different points.

A Gaussian process $GP(\mu_0, k)$ is a nonparametric model that is fully characterized by (i) its prior mean function $\mu_0 : X \to R$ and (ii) its positive-definite kernel or covariance function, $k : X \times X \to R$.

Let $D_i = \{(\vec{x}_n, y_n)\}_{n=0}^{i-1}$ be the set of past observations and $\vec{x}$ an arbitrary test point. The random variable $f(\vec{x})$ conditioned on observations $D_i$ follows a normal distribution with a mean and variance functions that depend on the prior mean function and the observed data through the kernel. So, the kernel is representing the covariance of the Gaussian Process random variables. In other terms the kernel function models the covariance between each pair in a space.

The GP prediction depends on the prior function and the observed data through the kernel. The prior function controls the GP prediction in unobserved regions and, thus, can be used to incorporate prior "beliefs" about the optimization problem. The kernel (or covariance function), instead, controls how much the observed points affect the prediction in nearby regions and, thus, governs the predictions in the already explored regions.

Accordingly, when two points (i.e., two configurations) in the search space $\vec{x}_1, \vec{x}_2$ have a high correlation (according to the selected kernel), it is expected that their associated function values $y_1, y_2$ (i.e., their performance indicators) to be similar.

The kernel is thus used to measure the similarity of two configurations, expressing the idea that similar configurations should yield similar performance.

Essentially, the GP is a regression model that is very good at predicting the expected value of a point and the uncertainty over that prediction. In Bayesian Optimization (BO), the two quantities are combined by the Acquisition Function to drive the search process. In the present embodiment, it has been used for the proposed examples a Matérn 5/2 kernel, which is the most widely used class of kernels in literature, however, other kernel choices would work as well.

The assumption so far has been that the performance $f$ can be expressed as a function of the configuration $\vec{x}$ only. However, the performance of an IT system, a DBMS for example, also depends on others, uncontrolled, variables such as the working condition $\vec{w}$ to which the application is exposed and, more importantly, the actual SUT $s$ that is addressed.

Bayesian Optimization (BO) has been extended to handle such situations. The key idea is that there are several correlated tasks $f_t(\vec{x})$ that shall be optimized. Essentially, the data from a certain task $f_t(\vec{x})$ briefly said $t$ in the following, can provide information about another task $f_{t'}(\vec{x})$ briefly said $t'$ in the following.

A task t is considered a definition of a certain SUT-working condition combination (e.g., the Cassandra DBMS executing a read-only workload), and it has associated a numeric characterization $\vec{c}$, which was introduced in the section above and will be further described in the following.

It is assumed that $\vec{c}$ is a numeric characterization of task t and it is defined a new combined kernel (or covariance) function that works over configurations $(\vec{x}, \vec{x}')$ and task characterizations $\vec{c}, \vec{c}'$: $k((\vec{x}, \vec{c}), (\vec{x}', \vec{c}'))$.

This new combined kernel is formalized as the sum of two kernels defined over the configuration space X and over the task characterization space C, respectively: $k((\vec{x}, \vec{c}), (\vec{x}', \vec{c}')) = k(\vec{x}, \vec{x}') + k(\vec{c}, \vec{c}')$. The kernel $k(\vec{x}, \vec{x}')$ is called the configuration kernel and measures the covariance between configurations, the kernel $k(\vec{c}, \vec{c}')$ is the task kernel and measures the covariance between tasks.

A GP with this combined kernel is a predictive model with an additive structure made of two components: $g = g_{\vec{x}} + g_{\vec{c}}$. The $g_{\vec{c}}$ component models overall trends among tasks, while the $g_{\vec{x}}$ component models configuration-specific deviation from this trend. Similarly to what has been done for the configuration kernel, the solution uses a Matérn 5/2 kernel also for the task kernel in the proposed examples, but other choices would work as well.

It should be understood that different covariance functions can be selected for the configuration kernel and for the task kernel.

In the method of the invention, it is exploited that the performance of a certain SUT-working condition combination is correlated with the performance of other similar SUT-condition combination (as a motivating example see Fig. 1), where the similarity is measured by the combined kernel function defined above. In other terms, the main goal of the invention is to provide a task characterization $\vec{c}_i$ which models how a particular combination $(s, \vec{w}_i)$ should be tuned, so to use the tunable properties of the system as a contextual information for the tuning algorithm.

Notice that the combined kernel has been defined using a sum operation. This means that two points in the search space are considered similar (highly correlated) when they either (1) have a similar configuration (highly correlated according to the selected configuration kernel function) or (2) have a similar task (highly correlated according to the selected task kernel). The two quantities could be combined using different operations, obtaining different behaviors. As an example, if the two kernels are multiplied, the two points would be considered similar only when they are highly correlated both in terms of configuration and task.

In other terms, by using this combined kernel the Gaussian Process space is enlarged with the task characterization component, but when optimizing the Acquisition Function only the configuration subspace is optimized. So, it is obtained a suggested configuration which is tailored for the current SUT-working condition, and this configuration is selected by leveraging all the configurations which have been tested in the past, even on different SUTs and/or working conditions.

*Reaction Matching*

In this section, is it described the Reaction Matching process, i.e. a distance computation methodology which is used to derive a task characterization.

The final goal is to provide the tuner module with a characterization vector $\vec{c}_i$. In order to do that, the method provides to start computing similarities between different tasks by using Reaction Matching: a technique inspired by the field of Recommender Systems (RS).

Recommender System (RS) programs are widely used in our every-day life. They are adopted to suggest items to users, helping them to navigate huge catalogs (like Netflix® or Amazon®). The essential purpose of a Recommender System (RS) is to predict the *relevance* $r_u(i)$ of an item $i$ for a user $u$.

To achieve this goal, Recommender System (RS) exploits similarities between items or users.

So, the proposed method treat the target task (SUT-working condition combination) $t = (s, \vec{w})$ as a user in a Recommender System (RS), and a certain configuration $\vec{x}$ as the item within the catalog X of the Recommender System (RS), containing all the feasible settings for the system. The relevance $r_{(s,\vec{w})}(\vec{x}) = r_t(\vec{x})$ reflects how much the system $s$ benefits from the configuration $\vec{x}$ w.r.t. the baseline (i.e., vendor default) configuration $\vec{x}_{bsl}$ when exposed to the condition $\vec{w}$.

When it is required to optimize a certain performance indicator $y_i$ (e.g., execution time), it is defined $f_{(s,\vec{w})}(\vec{x}) =$

$f_t(\vec{x})$ as the value of this performance indicator obtained by the system under test (SUT) *s* when configured using a configuration $\vec{x}$ and exposed to the condition $\vec{w}$. Assuming the baseline configuration $\vec{x}_{bsl}$ the relevance score is defined as:

$$r_{(s,\vec{w})}(\vec{x}) = r_t(\vec{x}) = \frac{f_t(\vec{x})}{f_t(\vec{x}_{bsl})} - 1 \qquad \text{(Eq. 2)}$$

To illustrate the Reaction Matching approach, it is supposed to have access to some previously collected information about the performance of some tasks (i.e., SUT-working condition combinations) $t_0$, $t_1$, $t_2$, ... (which might be the same system exposed to a different condition or even entirely different systems) where each task has been evaluated on a variety of configurations $\vec{x}_i$: $t_0$: ($\vec{x}_0$, $\vec{x}_1$, ... )$t_1$: ($\vec{x}_2$, $\vec{x}_3$, ... )$t_2$: ($\vec{x}_4$, $\vec{x}_5$, ... ). The evaluated configurations can be different across different tasks, but it is assumed that there is at least some overlap (i.e., for every pair of tasks we must have at least two common configurations).

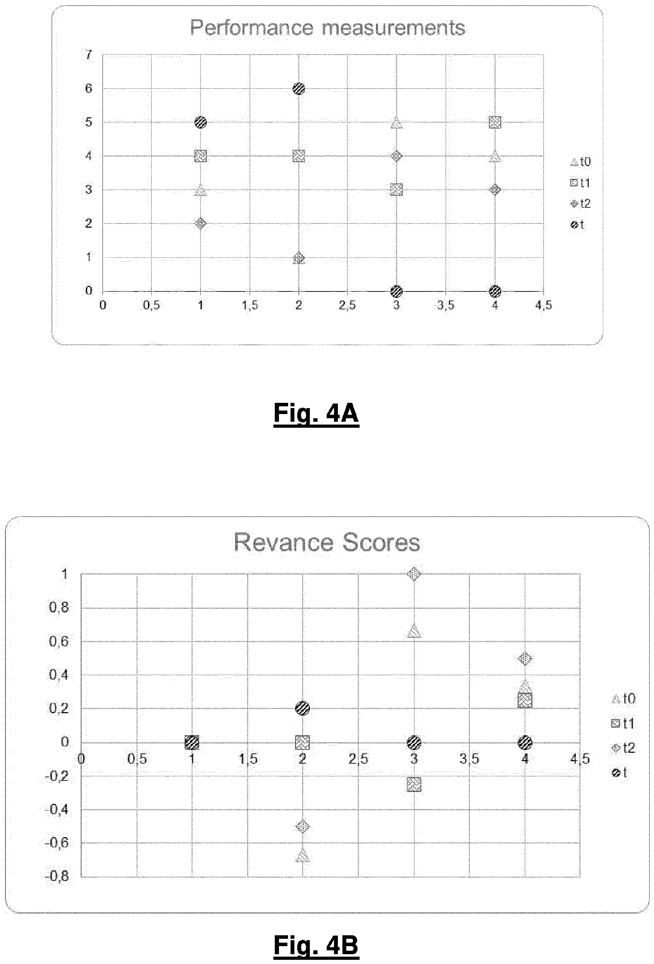

To measure the similarity between two tasks, it is used the Reaction Matching (RM) process, which is graphically represented in Figs 4A-4C and described in the following. Fig. 4B shows the relevance scores computed using Eq. 2, which brings all the baselines to 0.

After having computed the performance scores with Eq. 2, the similarity between two tasks is defined as inversely proportional to the distance of the relevance scores they received with the same configurations.

Defining $\{\vec{x}_i\}_{i=1}^n$ as the set of the configurations that have been evaluated both on a target task t (the task to be characterized) and on another task t' (which is available in the knowledge base), the distance between two tasks t,t' is computed as:

$$d_{tt'} = \sqrt{\frac{\sum_{i=1}^n (r_t(\vec{x_i}) - r_{t'}(\vec{x_i}))^2}{n}} \qquad \text{(Eq. 3)}$$

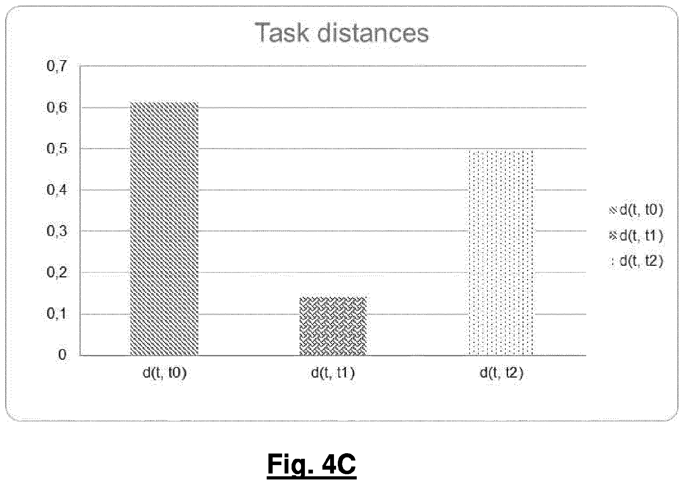

In the example of Figure 4C, Reaction Matching (RM) uses $\vec{x}_1$ to measure the distances, and identifies $t_1$ as the most similar task to t, as similarity is defined as the inverse of distance.

Similarity is also defined as the inverse of a distance of relevance scores of the first task $f_t(\vec{x})$ to be evaluated and a second task $f_{t'}(\vec{x})$ received with a set of configurations $\{\vec{x}_j\}_{j=1}^i$ .

It shall be noted that the definition of distance depends on the configuration vectors $\{\vec{x}_i\}_{i=1}^n$ which is evaluated on both the tasks and hence it is time dependent. In other words, Reaction Matching (RM) is a 'real time' or 'on the fly' process and the computed distances vary as the tuning proceeds and more knowledge becomes available. This is in contrast with other characterization methodologies and code-based approaches which never update their "beliefs". Moreover, by measuring the actual performance, the Reaction Matching (RM) characterization depends on the external conditions and is decoupled from the source code.

*Tuning model*

In this section, finally all the components of the tuning method of the invention are brought together. It has been explained how Reaction Matching (RM) measures the distance between different tasks *t,t'*, but the main goal is to provide to the tuner module a characterization $\vec{c}$ of the current task *t*.

To do that, the method starts by measuring the Reaction Matching (RM) distance between all the tasks that can be found in the knowledge base KB.

When starting from scratch, with an empty knowledge base KB, as explained above the first N tuning iterations (where N is defined by the user) are used to evaluate either the vendor default configuration or some randomly-sampled ones (depending on the user's preference) so to initialize the available knowledge base KB.

Then, the distances computed by the Reaction Matching (RM) process are used as an input to a clustering algorithm (for example k-means, DBSCAN, EM).

The computed clusters are considered as *archetypal tasks,* as they represent types of tasks that should be tuned in similar manners. Having being identified these archetypal tasks by means of the Reaction Matching, tasks which benefit from the same configurations are automatically grouped together. In other words, archetypal tasks are representative of a particular combination of systems and working conditions which should be configured similarly. The similarity in the tunable properties could be due to a similarity in the conditions, or in the application, or in the versions of the used components, or in the architecture upon which we ran the test, or in a combination of these factors or other unknown causes. The advantage of this approach is that it just observes and exploits similarities in the tunable properties, without trying to explain them.

Then, the distances between the target task t to be evaluated and the various archetypal tasks are finally used as a characterization for CGPTuner (contextual CP Tuner). To compute this distance, it is sufficient to compute the Reaction Matching (RM) distance between the current target task and all the archetypal tasks in the knowledge base (KB). Then, for each cluster it is taken the average of the distances between the target task and all the tasks that were assigned to the considered cluster by the clustering algorithm. Doing this for all the archetypes, it is obtained a vector of distances, which is used as the characterization vector $\vec{c}$ to be input into the CGPTuner.

It is important to stress that the characterization of the working condition does not rely on the identification of the current number and types of requests processed by the system, as per workload definition. Instead, SUT and working conditions are characterized using Reaction Matching (RM). As a general understanding, if two different SUTs, when exposed to different working conditions, require similar settings, then these two tasks should be considered as similar, and can be tuned using the same configuration. If the two tasks experience a performance boost from the same configurations, it can be inferred that they also show similar reactions to other configurations. In other words, it is expected that a pair of configuration-SUT-working conditions have similar patterns so that certain configurations are beneficial to both of them, while other ones are detrimental, and others again have no effect at all.

As said above, the current target task t is characterized in terms of its Reaction Matching (RM) distance w.r.t. the archetypal tasks that have been determined from the knowledge base by the clustering algorithm. Said archetypal tasks are identified by using the clustering algorithm on the knowledge base KB. So, once the knowledge base KB has been partitioned into some clusters, the real tuning can start. Notice that, as the tuning progresses, more and more points will be added to the knowledge base, potentially modifying the output of the clustering algorithm.

When tuning a certain system s, the last N iterations of the tuning process $\{\vec{x}_{i-N}, \dots, \vec{x}_i\}$ are considered. It is supposed that the user is able to provide a good estimate of N such that, inside the N considered iterations, it can be assumed that the actual working condition $\vec{w}$ did not change. It is considered the last N iterations as the current target task t and the N configurations as the set $\{\vec{x}_i\}_{i=1}^N$ used to compute the Reaction Matching (RM) distance. It is searched in the knowledge base KB all the available clusters and, for each cluster, the Reaction Matching (RM) distance between the current task t and the cluster is measured using the set $\{\vec{x}_i\}_{i=1}^N$, resulting in a characterization vector $\vec{c}$ as explained above.

It is to be noted that a stopping criterion is not necessarily required, as the tuning process can keep optimizing the system continuously. In this way, the tuner takes care of adapting the configuration to the working condition, both in terms of incoming workloads and other external factors. Since the proposed technique is based on BO, it will converge towards optimum configurations once they are found.

Each iteration of the tuning method involves 5 steps. Iteration i has access to all the previous i - 1 entries of the KB: $(s_j, \vec{x}_j, y_j) 1 \le j \le i$ - 1.

1. In the starting step, knowledge base KB is divided into tasks and each entry is assigned to a task. The goal of this step is to group together all the entries that were collected on similar working conditions. This can be done in three different ways:

   a. if working condition information $\vec{w}$ is available, it can be directly used and it can be applied an off-the-shelf clustering algorithm;

   a. if the user can provide a number N representing a number of tuning iterations under which the underlying condition w does not vary, a new task every N iterations can be created. In other terms, this requires to user to be able to identify the time scale under which the condition remains on similar values;

   In any case, a task t is assigned to each entry: $(\vec{x}_j, y_j, t_j)$. Ideally, there are more entries than tasks, so to have multiple entries assigned to each task.

2. Using the computed task information, the RM distance between every pair of tasks in the KB is computed. The task distances are then used to run an off-the-shelf clustering algorithm, assigning each task t to a cluster q. With this step, we have collapsed together the entries which were collected on different working conditions. This can happen for two reasons:

   a. the initial guess in step 1 was wrong; as an example, when we use strategy 1b and the working condition repeats in a periodic way. Different repetitions of the same working condition are initially assigned to different tasks, and then grouped together by the clustering.

b. the two different tasks are indeed representative of two different working conditions or systems, but they should be tuned in a similar way (i.e., benefit from the same configurations).

The knowledge base KB becomes: $(\vec{x_j}, y_j, q_j)$, where the task t is replaced with the newly created task q. At this point, we have reduced the number of identified tasks, and therefore we have increased the number of entries per task. As this allows to compute a more accurate RM distance, step 2 can be repeated iteratively.

3. At this point, computed tasks and task distances are used to derive the task characterization information. When characterizing task $t$, all the other tasks $t',t'',....$ Are considered. For each other task, the entries that were assigned to it: $t'$: $x'_1, x'_2, ...$ are considered. Then, the RM distance between target task $t$ and the other tasks $t',t'',...$ is computed: these will be the distances between the target task $t$ and the archetypal tasks $t'$, $t'',....$ i.e. the numeric vector $\vec{c}$. It can be noted that, if the computed characterization is very different from the one which was forecasted at step 5 of the previous iteration, it can be decided to use this information as a change point detection and create a new task, going back to step 2.

4. Using $(\vec{c_j}, \vec{x_j}, y_j)$ it is computed a CGP and the associated AF.

5. Using all the computed characterization vectors $\vec{c_j}$, it can be predicted the characterization $\vec{c_i}$ for the next point. $\vec{c_i}$ represents the characterization of the tunable properties of the SUT-working condition combination of the next iteration, and essentially is a forecast of the working condition. The easiest forecasting methodology consists in using the last one: $\vec{c_i} = \vec{c}_{i-1}$. The forecasted characterization is used to optimize the AF and select the next configuration $\vec{x_i}$ to evaluate. At this point, said configuration is applied, the associated performance score $y_i$ is measured, the knowledge base KB is updated and then the system can go to the next iteration, restarting from step 1.

In the above embodiment, it has been assumed that a significantly large knowledge base KB is available, so as to be able to obtain a relevant amount of information about different tasks. This can be done by evaluating many different systems in a test environment before moving to real production systems. In fact, the entire characterization is built with the goal of reusing old KBs. However, when this is not the case, it is even possible to start from scratch with an empty knowledge base KB. In this instance, the process would just create a single task and resort to simple Bayesian Optimization with GP. As more and more points become available, the number of tasks is increased and it is possible to derive useful characterizations.

As can be understood from the above description, the proposed method represents a valid solution to the configuration autotuning problem. Relevant elements of the method are represented by Reaction Matching process and clustering process to derive a characterization of both the system and the working condition: this allows to favourably exploit knowledge that was gathered on different tunable systems, to obtain a faster and more reliable optimization process.

Although the present disclosure has been described with reference to specific embodiment, it should be understood that the method and apparatus provided by the present disclosure can have a number of variations and amendments without departing from the scope and background of the present disclosure. The description given above is merely illustrative and is not meant to be an exhaustive list of all possible embodiments, applications or modifications of the invention. Thus, various modifications of the described methods and apparatus of the invention will be apparent to those skilled in the art without departing from the scope of the invention which is defined only by the appended claims.

**Claims**

1. A computer implemented tuning method carried on an IT system comprising a System Under Test, SUT, including a stack of software layers, provided with a number of adjustable parameters,

   the method comprising the steps of supplying a characterization and prediction module,
   a tuner module, and
   a knowledge base, KB, composed by N tuples , $(s_i, \vec{w_i}, \vec{x_i}, y_i)$ being gathered over iterative tuning sessions where each iteration is started by applying to a System Under Test, SUT, $s_i$ a configuration $\vec{x_i}$ suggested by said tuner module, exposing said system $s_i$ to an external working condition $w_i$ and gathering performance metrics resulting in a performance indicator score $y_i$,
   the method comprising
   building by said characterization and prediction module a characterization vector $\vec{c_i}$ for each tuple stored in said knowledge base (KB) using the information stored in said knowledge base and produces a prediction about the characterization vector $\vec{c_{i+1}}$ of the next tuning iteration $i + 1$, wherein a tuple of system and working condition, $s_i, w_i$, is defined as task and

where characterization vector $\vec{c_i}$ is associated with a task and is a numeric representation of the tunable properties of system $s_i$ when exposed to said external working condition $w_i$, and the distance between two characterization vectors $\vec{c_i}, \vec{c_j}$ represents how similarly the systems $s_i, s_j$ should have been configured in previous tuning iterations $i,j$ when the two systems $s_i, s_j$ were exposed to external working conditions $w_i, w_j$ respectively,

leveraging by the tuner module said knowledge base, KB, and

said characterization vectors $\vec{c_i}$ and $c_{i+1}$ and a Bayesian optimization, BO, to select a new suggested configuration $\vec{x_{i+1}}$ to be applied to said System Under Test $s_{i+1}$ in the next iteration $i + 1$,

and further defining a group of tasks which should be configured in a similar way, $t_k = ((s_i, w_i), (s_j, w_j),...)$ as archetypal task $t_k$, identifying by said

characterization module said archetypal tasks in the knowledge base, KB, by assigning each tuple of the knowledge base, KB, to an initial task and then iteratively measuring distances between tasks and clustering similar ones, so that tuples which should be tuned similarly are assigned to the same task,

said initial tasks being selected according to a user-specified parameter N, indicating that a new task should be created every N tuning iterations, and wherein

a similarity employed by said clustering is computed between tasks as an inverse of a distance of relevance scores of a first task $f_t(\vec{x})$ to be evaluated and a second task $f_{t'}(\vec{x})$ received with a set of configurations $\{x_j\}^i_{j=1}$ wherein said characterization vector $c_i$ is a vector of distances consisting of an average of the distances between a target task and all the archetypal tasks in the knowledge base, KB,

2. The computer implemented tuning method as in claim 1, wherein the external working condition $w_i$ is **characterized by** an external characterization methodology, and this characterization is used as an input for a clustering algorithm to derive said initial tasks instead of the user-specified parameter N.

3. The computer implemented tuning method as in claim 1, wherein the distance between two tasks t,t' used for the task clustering procedure, is computed as:

$$\sqrt{\frac{\sum_{i=1}^{n} (r_t(x_i) - r_{t'}(x_i))^2}{n}}$$

where $\{x_i\}^N_{i=1}$ is the set of configurations that have been evaluated on both tasks $t$ and $t'$, and $r_t(x_i)$ is a relevance score being a scalar value indicating how much task t benefits from the configuration $x_i$.

4. The computer implemented tuning method as in claim 3, wherein said relevance score $r_t(x_i)$ is defined as:

$$r_t(x_i) = \frac{\sum_{j \in J} \frac{f_j(x_i)}{f_j(x0)}}{|J|}$$

where $J$ is the set of entries in the knowledge base (KB) assigned to task $t$ for which $x_i$ has been evaluated, $f_j(x_i)$ is the performance score $y_j$ obtained at iteration $j$ when the system is configured using configuration $x_i$, and $f_j(x_0)$ is the performance score obtained at iteration j by the baseline configuration.

5. The computer implemented tuning method as in any of claims 1, 2, 3 or 4, wherein a surrogate model used to select configurations in said tuner module based on the Bayesian Optimization, BO, is a Gaussian Process, GP.

6. The computer implemented tuning method as in claim 5, wherein said Gaussian Process, GP, is a contextual gaussian process bandit tuner, CGPTuner, which uses as context said characterization vector $\vec{c_i}$ provided by said computed similarity.

7. The computer implemented tuning method as in claim 6, wherein Gaussian Process, GP, is provided with a combined

kernel function $k((\vec{x}, \vec{c}), (\vec{x}', \vec{c}'))$ which is the sum of configuration kernel $k(\vec{x}, \vec{x}')$ defined over a configuration space, x, and a task kernel $k(\vec{c}, \vec{c}')$ defined over a task characterization space, c.

8. The computer implemented tuning method as in claim 7, wherein said Gaussian Process, GP, has an additive structure made of a characterization component ($g_{\vec{c}}$) which models overall trends among tasks and a configuration component ($g_{\vec{x}}$) which models configuration-specific deviation from said overall trends.

9. The computer implemented tuning method as in any one of the previous claims, wherein it is provided a preliminary step when said knowledge base, KB, is empty, including preliminary tuning iterations dedicated to bootstrap said knowledge base.

10. The computer implemented tuning method as in claim 9, wherein said preliminary tuning iterations include evaluating vendor default, baseline, configuration and possibly a number of user-defined randomly-selected configurations.

11. Tuning system for a System Under Test, SUT, including a stack of hardware and software layers, provided with a number of adjustable parameters, comprising

a knowledge base, KB, composed by N tuples ($s_i$, $\vec{w}_i$, $\vec{x}_i$, $y_i$, where $s_i$ represents the System Under Test, SUT, $\vec{w}_i$ represents an external working condition to which the System Under Test, SUT, $s$ is exposed, $\vec{x}_i$ is a configuration vector in a configuration space X of said adjustable parameters and $y_i$ represents performance indicator score of said System Under Test, SUT, the knowledge base, KB, being stored in a memory,
a characterization and prediction module, and
a tuner module,
wherein said characterization and prediction module and tuner module are arranged and made to operate as in any one of the preceding claims.


**Patentansprüche**

1. Computerimplementiertes Justierungsverfahren, das auf einem IT-System ausgeführt wird, das ein System Under Test (SUT) umfasst, das einen Stapel von Softwareschichten umfasst, die mit einer Anzahl anpassbarer Parameter versehen sind,

wobei das Verfahren die Schritte des Bereitstellens
eines Charakterisierungs- und Vorhersagemoduls,
eines Justierungsmoduls und
einer Wissensbasis, KB, umfasst,
die aus N Tupeln, ($s_i$, $\vec{w}_i$, $\vec{x}_i$, $y_i$) besteht, die über iterative Justierungssitzungen gesammelt werden, wobei jede Iteration durch Anwenden einer Konfiguration $\vec{x}_i$, die durch das Justierungsmodul vorgeschlagen wird, auf ein System Under Test, SUT, $s_i$ gestartet wird, wobei das System $s_i$ gegenüber einer externen Arbeitsbedingung $w_i$ exponiert wird, und wobei Leistungsmetriken gesammelt werden, die in einem Leistungsindikatorscore $y_j$ resultieren,
wobei das Verfahren umfasst:

Bauen, durch das Charakterisierungs- und Vorhersagemodul, eines Charakterisierungsvektors $\vec{c}_i$ für jedes in der Wissensbasis, KB, gespeicherte Tupel unter Verwendung der in der Wissensbasis gespeicherten Information, und Erstellen einer Vorhersage über den Charakterisierungsvektor $\vec{c}_{i+1}$ der nächsten Justierungsiteration $i + 1$, wobei ein Tupel aus System- und Arbeitsbedingungen $s_i$, $w_i$ als Aufgabe definiert wird, und wobei der Charakterisierungsvektor $\vec{c}_i$ mit einer Aufgabe und einer numerischen Darstellung der justierbaren Eigenschaften des Systems $s_i$ assoziiert werden, wenn dieses gegenüber der externen Arbeitsbedingung $w_i$ exponiert wird, und wobei die Distanz zwischen zwei Charakterisierungsvektoren $\vec{c}_i$, $\vec{c}_j$ darstellt, wie ähnlich die Systeme $s_i$, $s_j$ in vorherigen Justierungsiterationen $i, j$ hätten konfiguriert werden sollen, wenn die zwei Systeme $s_i$, $s_j$ gegenüber den externen Arbeitsbedingungen $w_i$, $w_j$ jeweils exponiert worden wären,
Einsetzen, durch das Justierungsmodul, der Wissensbasis, KB, und der Charakterisierungsvektoren $\vec{c}_i$ und

$c_{i+1}$ und einer Bayes-Optimierung, BO, um eine neue vorgeschlagene Konfiguration $\vec{x_{i+2}}$, die auf das System Under Test $s_{i+1}$ in der nächsten Iteration $i + 1$ angewendet werden soll, auszuwählen, und ferner Definieren einer Gruppe von Aufgaben, die auf ähnliche Weise $t_k = ((s_i, w_i), (s_j, w_j),...)$ als archetypische Aufgabe $t_k$, konfiguriert werden soll, und Identifizieren, durch das Charakterisierungsmodul, der archetypische Aufgaben in der Wissensbasis, KB, durch Zuordnen jedes Tupels der Wissensbasis, KB, zu einer Ausgangsaufgabe, und anschließend iteratives Messen von Distanzen zwischen Aufgaben sowie Clustern ähnlicher, so dass Tupel, die ähnlich justiert werden sollen, der gleichen Aufgabe zugeordnet werden, wobei die Ausgangsaufgaben ausgewählt werden gemäß einem anwenderspezifizierten Parameter N, der anzeigt, dass eine neue Aufgabe alle N Justierungsiterationen erstellt werden soll, und wobei eine Ähnlichkeit, die durch das Clustering verwendet wird, zwischen den Aufgaben als eine Inverse einer Distanz von Relevanzscores einer ersten zu evaluierenden Aufgabe $f_t(\vec{x})$ und einer zweiten Aufgabe $f_t(\vec{x})$, die mit einem Satz an Konfigurationen $\{x_j\}^i_{j=1}$ erhalten wurde, berechnet wird, wobei der Charakterisierungsvektor $c_i$ ein Vektor von Distanzen ist, die aus einem Mittelwert der Distanzen zwischen einer Zielaufgabe und aller archetypischer Aufgaben in der Wissensbasis, KB, bestehen.

2. Computerimplementiertes Justierungsverfahren nach Anspruch 1, wobei die externe Arbeitsbedingung $w_i$ charakterisiert wird durch eine externe Charakterisierungsmethodologie, und wobei diese Charakterisierungsmethodologie als eine Eingabe für einen Clusteralgorithmus verwendet wird, um die initialen Aufgaben anstelle des anwenderspezifizierten Parameters N abzuleiten.

3. Computerimplementiertes Justierungsverfahren nach Anspruch 1, wobei die Distanz zwischen zwei Aufgaben $t, t'$, die für die Aufgabenclusterprozedur verwendet werden, berechnet wird als:

$$\sqrt{\frac{\sum_{i=1}^{n} (r_t(x_i) - r_{t'}(x_i))^2}{n}}$$

wobei $\{x_i\}^N_{i=1}$ der Satz von Konfigurationen ist, die an beiden Aufgaben $t$ und $t'$ evaluiert wurden, und wobei $r_t(x_i)$ ein Relevanzscore ist, der ein Skalarwert ist, der anzeigt, wieviel die Aufgabe $t$ von der Konfiguration $x_i$ profitiert.

4. Computerimplementiertes Justierungsverfahren nach Anspruch 3, wobei der Relevanzscore $r_t(x_i)$ definiert wird als:

$$r_t(x_i) = \frac{\sum_{j \in J} \frac{f_j(x_i)}{f_j(x0)}}{|J|},$$

wobei J der Satz von Einträgen in der Wissensbasis (KB) ist, der der Aufgabe $t$ zugeordnet ist, für die $x_i$ evaluiert wurde, $f_j(x_i)$ der Leistungsscore $y_j$ ist, der in Iteration $J$ aufgenommen wurde, als das System unter Verwendung der Konfiguration $x_i$ konfiguriert wurde, und wobei $f_j(x_0)$ der Leistungsscore ist, der in Iteration $j$ durch die Ausgangskonfiguration aufgenommen wurde.

5. Computerimplementiertes Justierungsverfahren nach einem der Ansprüche 1, 2, 3 oder 4, wobei ein Surrogatmodell, das in dem Justierungsmodul zum Auswählen von Konfigurationen anhand der Bayes-Optimierung, BO, verwendet wird, ein Gauß-Prozess, GP, ist.

6. Computerimplementiertes Justierungsverfahren nach Anspruch 5, wobei der Gauß-Prozess, GP, ein kontextueller Gauß-Prozess-Bandit-Justierer, CGPTuner, ist, der den Kontext des Charakterisierungsvektors $\vec{c_i}$ verwendet, der durch die berechnete Ähnlichkeit bereitgestellt wird.

7. Computerimplementiertes Justierungsverfahren nach Anspruch 6, wobei der Gauß-Prozess, GP, mit einer kombi-

nierten Kernfunktion $k((\vec{x}, \vec{c}), (x', \vec{c}'))$ bereitgestellt wird, die die Summe des Konfigurationskerns $k(\vec{x}, \vec{x}')$, definiert über einen Konfigurationsraum,x, und eines Aufgabenkerns $k(\vec{c}, \vec{c}')$, definiert über einen Aufgabencharakterisierungsraum, C, ist.

8. Computerimplementiertes Justierungsverfahren nach Anspruch 7, wobei der Gauß-Prozess, GP, eine additive Struktur aufweist, die aus einer Charakterisierungskomponente ($g_{\vec{c}}$), die Gesamttrends unter den Aufgaben modelliert, und aus einer Konfigurationskomponente ($g_{\vec{x}}$), die konfigurationsspezifische Abweichung von den Gesamttrends modelliert, besteht.

9. Computerimplementiertes Justierungsverfahren nach einem der vorstehenden Ansprüche, wobei ein vorläufiger Schritt bereitgestellt wird, wenn die Wissensbasis, KB, leer ist, einschließlich vorläufiger Justierungsiterationen, die auf das Bootstrapping der Wissensbasis gerichtet sind.

10. Computerimplementiertes Justierungsverfahren nach Anspruch 9, wobei die vorläufigen Justierungsiterationen Evaluieren einer Herstellerstandard-Ausgangskonfiguration und möglicherweise eine Anzahl anwenderdefinierter zufällig ausgewählter Konfigurationen einschließen.

11. Justierungssystem für ein System Under Test, SUT, das einen Stapel aus Hardware- und Softwareschichten enthält, die mit einer Anzahl anpassbarer Parameter versehen sind, umfassend:

eine Wissensbasis, KB, die aus N Tupeln ($s_i$, $\vec{w}_i$, $\vec{x}_i$, $y_i$, besteht, wobei $s_i$ das System Under Test ,SUT, darstellt, $\vec{w}_i$ eine externe Arbeitsbedingung darstellt, gegenüber der das System Under Test ,SUT, s exponiert ist, $\vec{x}_i$ ein Konfigurationsvektor in einem Konfigurationsraum $X$ der anpassbaren Parameter ist und $y_i$ einen Leistungsindikator des System Under Test, SUT, darstellt, wobei die Wissensbasis, KB, in einem Speicher gespeichert ist, ein Charakterisierungs- und Vorhersagemodul, und
ein Justierungsmodul,
wobei das Charakterisierungs- und Vorhersagemodul und Justierungsmodul angeordnet und eingerichtet sind, gemäß einem der vorstehenden Ansprüche zu arbeiten.

## Revendications

1. Procédé de réglage mis en œuvre par ordinateur réalisé sur un système informatique comprenant un système sous test, SUT, comportant une pile de couches logicielles, doté d'un certain nombre de paramètres ajustables,

le procédé comprenant les étapes de fourniture
d'un module de caractérisation et de prédiction,
d'un module de réglage, et
d'une base de connaissances, KB, composée de N uplets, ($s_i$, $\vec{w}_i$, $\vec{x}_i$, $y_i$) rassemblés sous des sessions de réglage itératives où chaque itération est démarrée en appliquant à un système sous test, SUT, $s_i$ une configuration $\vec{x}_i$ suggérée par ledit module de réglage, en exposant ledit système $s_i$ à une condition de fonctionnement externe $w_i$ et en rassemblant des métriques de performance donnant lieu à un score indicateur de performance y,, le procédé comprenant
la construction, par
ledit module de caractérisation et de prédiction, d'un vecteur de caractérisation $\vec{c}_i$ pour chaque uplet stocké dans ladite base de connaissances (KB) en utilisant les informations stockées dans ladite base de connaissances et la production d'une prédiction concernant le vecteur de caractérisation $\overrightarrow{c_{i+1}}$ de la prochaine itération de réglage i + l, dans lequel un uplet de condition de système et de fonctionnement, $s_i, w_i$, est défini en tant que tâche et où le vecteur de caractérisation $\vec{c}_i$ est associé à une tâche et est une représentation numérique des propriétés réglables du système Si lorsqu'il est exposé auxdites conditions de fonctionnement externes $w_i$, et la distance entre deux vecteurs de caractérisation $\vec{c}_i, \vec{c}_j$ représente la similarité avec laquelle les systèmes $s_i, s_j$ auraient dû être configurés dans des itérations de réglage précédentes i, j lorsque les deux systèmes $s_i, s_j$ ont été exposés aux conditions de fonctionnement externes $w_i, w_j$ respectivement,
l'exploitation, par le module de réglage, de ladite base de connaissances, KB, et desdits vecteurs de caractérisation c et $c_{i+1}$ et d'une optimisation bayésienne, BO, pour sélectionner une nouvelle configuration suggérée X à appliquer audit système sous test $s_{i+1}$ dans la prochaine itération i + I,

et la définition

en outre d'un groupe de tâches

qui doivent être configurées d'une manière similaire,

$t_k = ((s_i, w_j), (s_i, w_j), ...)$ en tant que tâche archétypique $t_k$,

et l'identification, par ledit

module de caractérisation, desdites tâches archétypiques dans la base de connaissances, KB,

en affectant chaque uplet de la base de connaissances, KB, à une tâche initiale et en mesurant ensuite de manière itérative des distances entre des tâches et en groupant des tâches similaires, de telle sorte que des uplets qui doivent être réglés de manière similaire soient affectés à la même tâche,

lesdites tâches initiales étant sélectionnées selon un paramètre N spécifié par l'utilisateur, indiquant qu'une nouvelle tâche doit être créée toutes les N itérations de réglage, et dans lequel

une similarité employée par ledit groupement est calculée entre des tâches en tant qu'inverse d'une distance de scores de pertinence d'une première tâche $f_t(\vec{x})$ à évaluer et d'une deuxième tâche $ft \cdot (\vec{x})$ reçues avec un jeu de configurations $\{X_j\}^i_{j=1}$ dans lequel ledit vecteur de caractérisation $c_i$ est un vecteur de distances consistant en une moyenne des distances entre une tâche cible et toutes les tâches archétypiques dans la base de connaissances, KB,

2.  Procédé de réglage mis en œuvre par ordinateur selon la revendication 1, dans lequel la condition de fonctionnement externe Wi est **caractérisée par** une méthodologie de caractérisation externe, et cette caractérisation est utilisée en tant qu'entrée pour un algorithme de groupement pour dériver lesdites tâches initiales au lieu du paramètre N spécifié par l'utilisateur.

3.  Procédé de réglage mis en œuvre par ordinateur selon la revendication 1, dans lequel la distance entre deux tâches t, t' utilisée pour la procédure de groupement de tâches, est calculée comme suit :

$$\sqrt{\frac{\sum_{i=1}^n (r_t(x_i) - r_{t'}(x_i))^2}{n}}$$

où $\{X_j\}^N_{j=1}$ est le jeu de configurations qui a été évalué sur les deux tâches t et t ', et $r_t(x_i)$ est un score de pertinence qui est une valeur scalaire indiquant dans quelle mesure la tâche t profite de la configuration $x_i$.

4.  Procédé de réglage mis en œuvre par ordinateur selon la revendication 3, dans lequel ledit score de pertinence $r_t(x_i)$ est défini comme suit :

$$r_t(x_i) = \frac{\sum_{j \in J} \frac{f_j(x_i)}{f_j(x0)}}{|J|}$$

où J est le jeu d'entrées dans la base de connaissances (KB) affecté à la tâche t pour laquelle $x_i$ a été évalué, $f_j(x_i)$ est le score de performance $y_j$ obtenu à l'itération j lorsque le système est configuré en utilisant la configuration $x_i$, et $f_j(x_0)$ est le score de performance obtenu à l'itération j par la configuration de base.

5.  Procédé de réglage mis en œuvre par ordinateur selon l'une des revendications 1, 2, 3 ou 4, dans lequel un modèle de substitution utilisé pour sélectionner des configurations dans ledit module de réglage sur la base de l'optimisation bayésienne, BO, est un processus gaussien, GP.

6.  Procédé de réglage mis en œuvre par ordinateur selon la revendication 5, dans lequel ledit processus gaussien, GP, est un dispositif de réglage bandit de processus gaussien contextuel, CGPTuner, qui utilise comme contexte ledit vecteur de caractérisation $\vec{c}_i$ fourni par ladite similarité calculée.

7.  Procédé de réglage mis en œuvre par ordinateur selon la revendication 6, dans lequel le processus gaussien, GP, est doté d'une fonction noyau combinée $k((\vec{x}, \vec{c}), (\vec{x'}, \vec{c'}))$ qui est la somme d'un noyau de configuration $k(\vec{x}, \vec{x'})$ défini

sur un espace de configuration, x, et d'un noyau de tâche $k(\vec{c}, \vec{c}')$ défini sur un espace de caractérisation de tâche, C.

8. Procédé de réglage mis en œuvre par ordinateur selon la revendication 7, dans lequel ledit processus gaussien, GP, a une structure additive constituée d'un composant de caractérisation ($g_{\vec{c}}$) qui modélise des tendances générales parmi des tâches et d'un composant de configuration ($g_{\vec{x}}$) qui modélise un écart spécifique à une configuration par rapport auxdites tendances générales.

9. Procédé de réglage mis en œuvre par ordinateur selon l'une des revendications précédentes, dans lequel il est prévu une étape préliminaire lorsque ladite base de données, KB, est vide, comportant des itérations de réglage préliminaires dédiées à l'amorçage de ladite base de connaissances.

10. Procédé de réglage mis en œuvre par ordinateur selon la revendication 9, dans lequel lesdites itérations de réglage préliminaires comportent l'évaluation d'une configuration de base par défaut de fournisseur et éventuellement d'un certain nombre de configurations définies par l'utilisateur choisies de manière aléatoire.

11. Système de réglage pour un système sous test, SUT, comportant une pile de couches matérielles et logicielles, doté d'un certain nombre de paramètres ajustables, comprenant

une base de connaissances, KB, composée de N uplets ($s_i$, $\vec{w}_i$, $\vec{x}_i$, $y_i$), où $s_i$ représente le système sous test, SUT, $\vec{w}_i$ représente une condition de fonctionnement externe à laquelle le système sous test, SUT, s est exposé, X est un vecteur configuration dans un espace de configuration X desdits paramètres ajustables et $y_i$ représente un score indicateur de performance dudit système sous test, SUT, la base de connaissances, KB, étant stockée dans une mémoire,
un module de caractérisation et de prédiction, et
un module de réglage,
dans lequel ledit module de caractérisation et de prédiction et ledit module de réglage sont agencés et conçus pour fonctionner selon l'une des revendications précédentes.

Fig. 1C Cassandra with read-only workload

Fig. 1B Cassandra with update-heavy workload

Fig. 1A MongoDB with update-heavy workload

**Fig. 2**

Tuning process and architecture

**Fig. 3A** Gaussian process as surrogate model

**Fig. 3B** Acquisition Function (AF) as Lower Confidence Bound

**Fig. 4A**

**Fig. 4B**

**Fig. 4C**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9958931 B
- US 9800466 B
- US 20120060146 A
- US 8954309 B
- US 2017200091 A
- US 7908119 B
- US 9143554 B
- US 20060047794 A
- US 20100199267 A
- US 20180349158 A
- US 20200293835 A

### Non-patent literature cited in the description

- **SONGYUN DUAN ; VAMSIDHAR THUMMALA ; SHIVNATH BABU.** Tuning database configuration parameters with ituned. *Proceedings of the VLDB Endowment 2.1,* August 2009, 1246-1257
- **DANA VAN AKEN et al.** Automatic database management system tuning through large-scale machine learning. *Proceedings of the ACM SIGMOD International Conference on Management of Data.,* May 2017, 1009-1024
- **ANDREAS KRAUSE et al.** Contextual Gaussian Process Bandit Optimization. *Neural Information Processing Systems 2011 (NIPS2011)*
- A Collaborative Filtering Approach for the Automatic Tuning of Compiler Optimisations. **STEFANO CEREDA et al.** ARXIV.ORG. CORNELL UNIVERSITY LIBRARY, 11 May 2020
- **BOBAK SHAHRIARI et al.** Taking the Human Out of the Loop: A Review of Bayesian Optimization. *Proceedings of the IEEE,* January 2016, vol. 104 (1), ISSN 0018-9219, 148-175